# EUROPEAN PATENT SPECIFICATION

(11) **EP 2 098 272 B1**
(45) Date of publication and mention of the grant of the patent: **13.04.2011**
(21) Application number: 09250240.0
(22) Date of filing: 29.01.2009
(51) Int. Cl.: B01D 29/44, D21D 5/16, B01J 8/02

(54) **Arrangement for splicing flat screen panels together for forming a cylindrical screen therewith**
Anordnung zum Verbinden von flachen Sieb-Paneelen, um daraus einen Siebzylinder zu bilden
Agencement pour connecter de panneaux de tamis plats pour en former un tamis cylindrique

(30) Priority: 21.02.2008 US 35273
(43) Date of publication of application: 09.09.2009
(73) Proprietor: Weatherford/Lamb, Inc., Houston Texas 77027 (US)
(72) Inventor: Parr, Tony, Hudson, Wisconsin 54016 (US); Berry, Gerry, Elk River, Minnesota 55330 (US); Schmitt, Benjamin, N.W., Coon Rapids, Minnesota 55448 (US)
(74) Representative: Shanks, Andrew

(56) References cited:
- EP-A- 0 893 536
- WO-A-01/51168
- WO-A-95/16819
- CA-A1- 2 178 683
- US-A- 4 276 265
- US-A- 4 374 729
- US-A- 4 406 326
- US-A- 5 069 279
- US-A- 5 622 625
- US-A1- 2003 115 754

## Description

### BACKGROUND

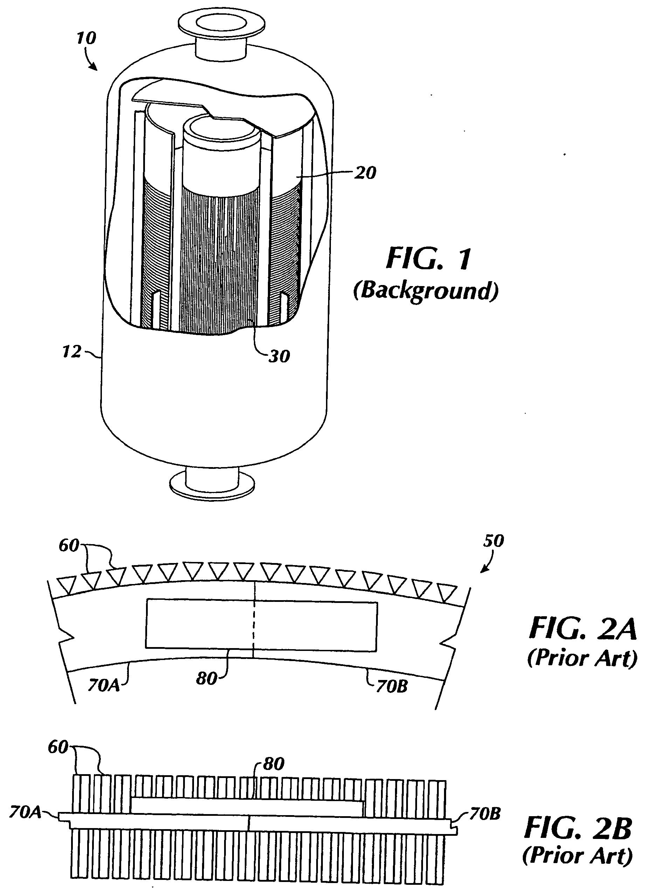

Radial flow assemblies are used in chemical processes such as catalytic reforming, styrene dehydrogenation, ammonia conversion, and the like. In its simplest form, a radial flow assembly has two concentric screens with the annulus filled with treatment media. For example, FIG. 1 shows an example of a typical radial flow reactor vessel 10 for a chemical processing system. The vessel 10 includes a chamber 12 having an outer basket 20 and a centerpipe 30, although a variety of other configurations are known and used. Both the basket 20 and centerpipe 30 are composed of wires welded to rods to form a number of slot opening for filtering the radial process flow. The slot openings on both the centerpipe 30 and outer basket 20 can be oriented vertically to allow media to slide up and down during processing without becoming abraded by edges of the openings. The basket 20 and centerpipe 30 may be any height and diameter depending on the implementation, and the slot openings between the wires can be as small as 0.010 in. (0.25 mm) and can be increased by to 0.0004 in. (0.01 mm) increments to a desired width.

To form the basket 20 and centerpipe 30, assemblers splice a number of screen panels together and roll the spliced screen panels to form the desired diameter of the resulting basket, centerpipe, or the like. FIGS. 2A-2B illustrate one arrangement 50 for splicing screen panels 40A-B together according to the prior art. As shown, each panel 40A-B has a number of wires 60 (also known as "V-wires") welded to a support rod 70A-B. To splice the panels 40A-B together, assemblers weld a splice plate 80 composed of a comparable metal material at the joints between adjoining rods 70A-B to connect the panels 40A-B together.

Because these splice plates 80 must be welded at the numerous joints between support rods 70A-V, splicing panels 40A-B can be time consuming. In addition, the arrangement 50 of splice plates 80 has been found to hinder the assemblers ability to roll the spliced panels 40A-B to form a basket or centerpipe while readily maintaining the required cylindrical shape within acceptable tolerances. This resistance of the prior art spliced panels to roll into an ideal cylindrical shape is referred to as "peaking." If the spliced screen panels 40A-B experience too much of this peaking during rolling, then the resulting cylindrical shape will likely be out of acceptable tolerances. Because baskets and centerpipes may be nested within one another, maintaining the cylindrical shape for the screen within acceptable tolerances can be important.
European Patent Application EP 0,893,536 discloses a number of embodiments of modular cylindrical screen assemblies and different methods of forming the screen assemblies by connecting rolled screens with nonwelded lap joints.
International Patent Application PCT/US01/00473 discloses a number of cylindrical wedge wire screens with encircling rings for processing fibres into paper pulp. The screens are assembled according to various methods of connecting wedge wires to the encircling rings.

### SUMMARY

Panels of a filter screen have a plurality of rods and a plurality of wires. The rods are arranged parallel to one another in a first direction. The wires are arranged parallel to one another and are attached in a perpendicular direction to the rods. The rods have jointed ends with a tab and a bevel along one edge of the panels and have flush ends along an opposite edge of the panels. The panels are connected together edge to edge in an elongated sheet by adjoining the jointed and the flush ends of the rods and then welding a plurality of splice bars alternatingly between adjacent ones of the rods at the joints. The elongated sheet is then rolled into a cylindrical tier that can be used as a portion of a basket, centerpipe or other cylindrical screen for a radial flow process or the like.

Additional details and information regarding the disclosed subject matter can be found in the following description and drawings.

### BRIEF DESCRIPTION OF THE DRAWINGS

FIG. 1 illustrates a radial flow reactor vessel as background of the present disclosure.

FIG. 2A is a top view of a prior art arrangement for splicing screen panels together.

FIG. 2B is a back view of the arrangement in FIG. 2A.

FIG. 3 is an elevational view of an arrangement for splicing screen panels together according to the present disclosure.

FIG. 4 is an end view of the arrangement in FIG. 3.

FIG. 5 is a perspective view of the arrangement in FIG. 3.

FIG. 6 is a cross-sectional view of the arrangement in FIG. 3.

FIG. 7 shows a plurality of screen panels and splice bars for assembly.

FIG. 8 shows a detail of two adjoining screen panels spliced together by splice bars according to the present disclosure.

FIG. 9 shows the screen panels joined as an elongated sheet.

FIG. 10 shows the screen panels rolled into a cylindrically shaped tier.

FIG. 11 shows several cylindrically shaped teirs connected together to form a cylindrical screen.

### DETAILED DESCRIPTION

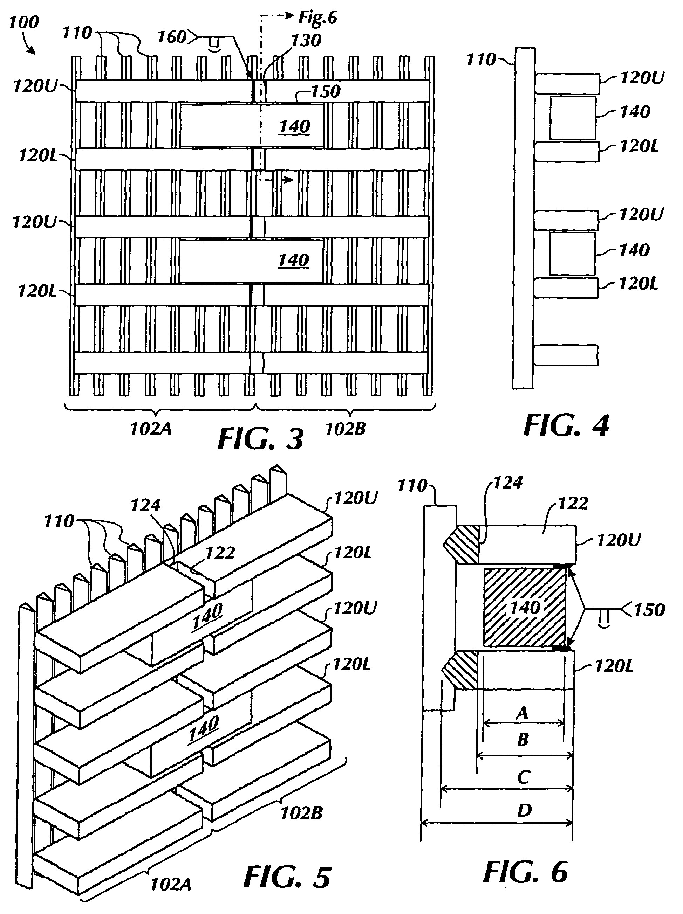

FIGS. 3-6 illustrate an arrangement 100 according to the present disclosure for splicing screen panels 102A-B together to form a basket, centerpipe, or other screen for a chemical treatment process. In FIG. 3, for example, portion of a first screen panel 102A is shown spliced together with portion of another screen panel 102B. Each of this panels 102A-B is first constructed as a planar screen having parallel wires 110 (e.g., "V-wires") attached at their intersections to support rods 120 oriented in a perpendicular direction. Attachment of the wires 110 to the rods 120 can be performed by electric resistance welding, binding, or other technique. Once constructed, the panels 102A-B are adjoined one end to the other and spliced together.

To splice the panels 102A-B together, splice bars 140 are intermittently positioned at joints 130 between adjacent support rods 120. Accordingly, each splice bar 140 has a joint 130 above it formed by two adjoining upper support rods 120U on the adjacent panels 102A-B and has a joint 130 below it formed by two adjoining lower support rods 120L on the adjacent panels 102A-B. These joints 130 are created by a partial bevel 122 and a tab 124 formed on the ends of rods 120 along one of the panel's edges (e.g., panel 102B), as best shown in FIGS. 5 and 6.

At these joints 130, each bar 140 is positioned so that its back edge is approximately flush with the back edge of the support rods 120U-L as shown in FIG. 6. In one implementation, the square cross-section of the bar 140 with sides of depth A of about 0.63-inches fits in between the upper and lower bars 120U-L with only a small gap of about 0.03-inches between the bar 140 and rods 120U-L. In addition, the bar 140 fits over the space of the partial bevel 122 that has a depth B of about 0.75-inches, which is greater than the bar's depth A. In this way, the bar 140 is positioned a distance from the wires 110 by a space that is at least greater than the depth of the rods' tabs 124. The thickness of each rod 120 is about 5/16-inches. The overall depth C of the rods 120 is about 1.00-inches, and the overall depth D of the assembly of rods 120 and wires 110 is about 1.17-inches. The length of the tab 124 (*i.e*., the width of each joint as viewed from the front as in FIG. 3) is about 0.19-inches.

At the joints 130, assemblers make square butt welds between the bars 140 and support rods 120U-L at locations 150 (See FIGS. 3 and 6) to attach the splice bars 140 to the rods 120. Each of the butt welds at locations 150 runs the length of the back edge of the bars 140. These butt welds between bars 140 and rods 120 can be made using electric resistance welding or other technique. In addition to the butt welds, the assemblers make slot welds at locations 160 (*See* FIGS. 3 and 6) between the tabs 124 and the flush ends of the support rods 120 at the joints 130. These slot welds at locations 160 are about 0.31-inches in width at the joints 130. These slot welds can use electric resistance welding or other technique and can use the splice bar 140 as backing for full penetration of the weld.

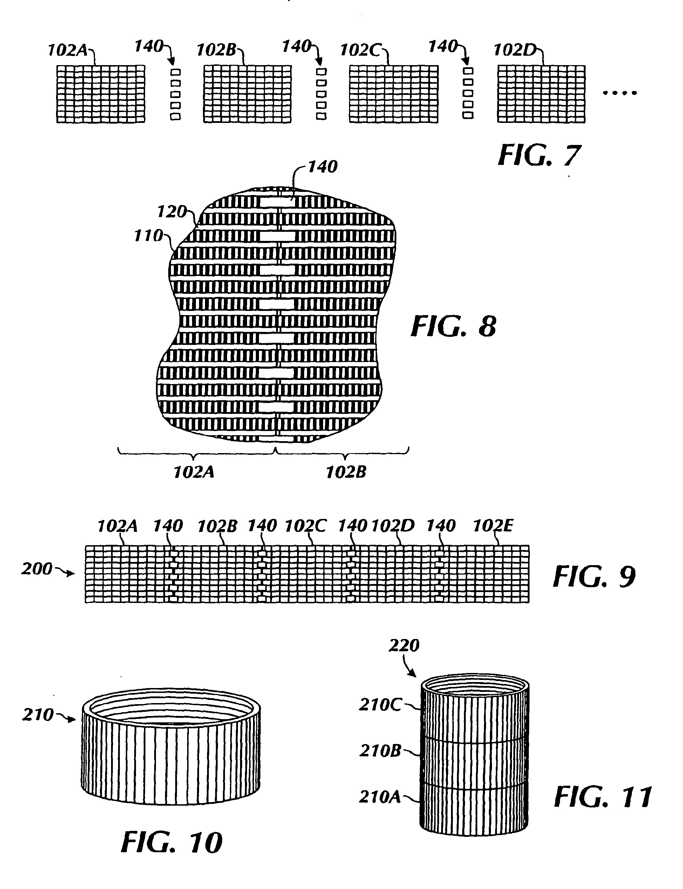

Once the panels 102A-B have been spliced together with the splice bars 140 according to the above techniques, assemblers can then form the panels into portion of a basket, centerpipe, or other screen for a chemical process. For example, stages of assembling a cylindrical screen portion are schematically shown in FIGS. 7 through 11. Starting in FIG. 7, assemblers create the plurality of planar screen panels 102A-D having the wires 110 and rods 120 discussed previously. Each of these screen panels 102A-D can be about 70-inches vertically (*i.*e., height of wires 110) and 100-inches horizontally (*i.e*., length of rods 120), although other dimensions can be used depending on the implementation.

Assemblers then splice together adjoining ends of adjacent screen panels 102A-D using the splice bars 104 according to the techniques discussed previously. For example, FIG. 8 shows a left screen panel 102A having an edge on which each of the support rods 120 has a flush end spliced to a right screen panel 102B having an edge on which each of the support rods 120 has a jointed end with the bevels 122 and tabs 124 discussed previously. Assemblers adjoin these edges together so that the ends of the rods 120 abut one another and weld the splice bars 140 alternatingly between adjacent ones of the rods 120 at the joints 130 using the techniques discussed previously.

The splicing of adjoining ends of the screen panels 102A-D is repeated for several such panels 102 until assemblers make an elongated sheet 200 as shown in FIG. 9. The elongated sheet 200 has an overall length of the desired circumference of the cylindrical screen to be formed. In one example, fives such screen panels 102A-E may be spliced together in this manner to make an elongated sheet 200 with a length of about 500-inches (*i.e*., about 41 2/3-ft.).

When enough panels 102A-E are connected together to make up the desired circumference of a basket, a centerpipe, or the like, the connected panels 102A-D are then rolled using rolling procedures known in the art. Use of the splice bars 140 and their connection to upper and lower support rods 120 at the splice joints 130 makes rolling the assembly of spliced panels 102 easier for assemblers to perform accurately. In particular, the arrangement 100 disclosed herein reduces the amount of "peaking" that occurs at the splice joints when assemblers roll the joined panels 102A-E into the cylindrical shape for the basket or centerpipe. "Peaking" refers to a tendency of the joined panels to resist forming an ideal cylindrical shape when being rolled. If the rolled screen panels 102A-E experience too much peaking, then the chance that the resulting cylindrical shape will be out of acceptable tolerance increases.

Issues associated with peaking may be reduced with the present arrangement 100 for a number of reasons. For example, it is believed that the increased amount of material provided by the splice bars 140 helps disperse heat applied at the joints 130 when the bars 140 are welded to the support rods 120. The increased dispersion of heat may decrease the chances that the material properties of the bars 140 and rods 120 are altered or hardened during the welding process. Such hardening would result in greater resistance at the splice joints 130 to bend during the rolling process if it were not alleviate by the present arrangement 100.

After performing the rolling process, the elongated sheet 200 has been rolled into a cylindrical tier 210 as shown in FIG. 10, and the two free ends of the rolled sheet 210 are spliced together using the splice bars 140 and techniques discussed previously. Depending on the desired arrangement and radial flow, the sheet 210 may be rolled with the wider ends of the wires 110 positioned on the inner or outer diameter of the resulting cylindrical tier 210. Additional cylindrical tiers 210A-C can then be created in the same manner and stacked together using techniques known in the art to form a cylindrical screen 220 such as shown in FIG. 11. This cylindrical screen 220 can then be used as part of a basket, centerpipe, or the like in a chemical treatment process. Although only schematically shown in FIG. 11, it will be appreciated that the cylindrical screen 220 can include top plates, reinforcing rods, and other structures known and used in the art for constructing a basket, centerpipe, or the like. In one example, an exemplary screen 220 can have 40 screen panels 102 with an overall height of about 46-ft. Such a screen 220 would have eight tiers 210 with each tier 210 made up of about five panels 102 spliced together.

In the present disclosure, the wires 110 and rods 120 of the screen panels can be composed of 304, 316, or 321 stainless steel, although other metals may be used. For example, a suitable wire includes the 130 size wire available from Johnson Screens, and a suitable rod includes the TE.313X1.00 rod available from Johnson Screens. The splice bars 140 can be composed of a comparable material, such as 304(h) stainless steel, although other metals may be used. In addition, the wires 110 can attach to the rods 120 and the panels can be rolled into a cylindrical shape using techniques such as disclosed in U.S. Pat. Nos. 2,046,458; 4,096,911; 4,276,265; 5,015,383; 5,118,419; and 6,785,964, which are incorporated herein by reference in their entirety.

The foregoing description of preferred and other embodiments is not intended to limit or restrict the scope or applicability of the inventive concepts conceived of by the Applicants. In exchange for disclosing the inventive concepts contained herein, the Applicants desire all patent rights afforded by the appended claims. Therefore, it is intended that the appended claims include all modifications and alterations to the full extent that they come within the scope of the following claims or the equivalents thereof.

## Claims

1. A filter screen (100), comprising:
a plurality of rods (120) arranged parallel to one another in a first direction, the rods (120) having first and second opposing ends and first and second opposing edges, the first ends of at least some of the rods (120) adjoining the second ends of at least some of the rods (120) to form joints (130);
a plurality of wires (110) arranged parallel to one another in a second direction perpendicular to the first direction and attached to the first edges of the rods (120); and
a plurality of splice bars (140) welded between alternating pairs of the rods (120) adjacent the joints (130).

2. The filter screen (100) of claim 1, comprising:
a plurality of panels (102), each of the panels (102) having the plurality of rods (120) and having the plurality of wires (110),
wherein a first of the panels (102A) has the first ends of its rods (120) adjoining the second ends of the rods (120) of a second of the panels (102B) to form a plurality of the joints (130); and
wherein the plurality of splice bars (140) position between alternating pairs of the rods (120) adjacent the joints (130), each of the splice bars (140) welded to the adjacent rods (120).

3. The filter screen of claim 1, comprising:
a plurality of cylindrical tiers (210A...) stacked together, each of the tiers (210A-C) having a plurality of panels (102A...), each of the panels (102A...) having the plurality of rods (120) and having the plurality of wires (110),
wherein the panels (102A...) for each of the tiers (210A...) have the first ends of the rods (120) adjoining the second ends of the rods (120) to form a plurality of the joints (130) and a plurality of splice bars (140) positioned between alternating pairs of the rods (120U-L) adjacent the joints (130), each of the splice bars (140) welded to the adjacent rods (120).

4. The screen of claim 1, 2, or 3, wherein the first ends of the rods (120) each comprise a tab (124) extending from the first end along the first edge such that the first end at the second edge defines a bevel (122).

5. The screen of claim 4, wherein the second ends of the rods (120) each define a flush surface.

6. The screen of claim 4, wherein the tabs (124) have slot welds (160) with the second ends of the rods (120) at the joints (130).

7. The screen of claim 4, wherein each of the splice bars (140) has a cross-section with a side dimension that is less than a depth of the bevel (122) from the second edge of the rod (120).

8. The screen of claim 1, 2, or 3, wherein each of the splice bars (140) has a cross-section with a side dimension substantially equal to a distance separating the adjacent ones of the rods (120U-L).

9. The screen of claim 1, 2, or 3, wherein each of the splice bars (140) has a square weld (150) between the splice bar (140) and the second edges of each of the adjacent ones of rods (120U-L) adjacent the joints (130).

10. The screen of claim 3, wherein the cylindrical screen (220) comprises at least a portion of a basket or a centerpipe of a radial flow assembly.

11. A filter screen assembly method, comprising:
arranging parallel rods (120) in a first direction,
attaching parallel wires (110) to the parallel rods (120) in a second direction perpendicular to the first direction; and
forming joints (130) by adjoining jointed ends of at least some of the rods (120) to flush ends of at least some of the rods (120); and
welding a plurality of splice bars (140) between alternating pairs of the rods (120U-L) adjacent the joints (130).

12. The method of claim 11, wherein arranging the parallel rods (120) and attaching the parallel wires (110) comprise forming a plurality of separate panels (102A...) having a plurality of the parallel rods (120), each of the panels (102A...) having the jointed ends of the rods (120) along a first edge of the panel (102A...) and the flush end of the rods (120) along an opposite second edge of the panel (102A... ).

13. The method of claim 12, further comprising:
adjoining the first and second edges of the separate panels (102A...) together; and
welding the splice bars (140) at the joints (130) formed between the adjoining edges.

14. The method of claim 12, further comprising forming a cylindrical tier (210) by:
forming an elongated sheet (200) with the separate panels (102A...);
rolling the elongated sheet (200) into a cylindrical shape; and
connecting free ends of the rolled sheet by welding the splice bars (140) alternatingly on the joints (130) at the free ends.

15. The method of claim 14, further comprising forming a cylindrical screen (220) by stacking a plurality of the cylindrical tiers (210A...) together.

## Patentansprüche

1. Filtersieb (100), das aufweist:
eine Vielzahl von Stäben (120), die parallel zueinander in einer ersten Richtung angeordnet sind, wobei die Stäbe (120) ein erstes und zweites entgegengesetztes Ende und einen ersten und zweiten entgegengesetzten Rand aufweisen, wobei die ersten Enden von mindestens einigen der Stäbe (120) an die zweiten Enden von mindestens einigen der Stäbe (120) angrenzen, um Verbindungen (130) zu bilden;
eine Vielzahl von Drähten (110), die parallel zueinander in einer zweiten Richtung senkrecht zur ersten Richtung angeordnet und an den ersten Rändern der Stäbe (120) befestigt sind; und
eine Vielzahl von Verbindungsstäben (140), die zwischen abwechselnden Paaren von Stäben (120) benachbart den Verbindungen (130) geschweißt sind.

2. Filtersieb (100) nach Anspruch 1, das aufweist:
eine Vielzahl von Tafeln (102), wobei eine jede der Tafeln (102) die Vielzahl der Stäbe (120) und die Vielzahl der Drähte (110) aufweist,
wobei bei einer ersten der Tafeln (102A) die ersten Enden ihrer Stäbe (120) an die zweiten Enden der Stäbe (120) einer zweiten der Tafeln (102B) angrenzen, um eine Vielzahl der Verbindungen (130) zu bilden; und
wobei die Vielzahl der Verbindungsstäbe (140) zwischen abwechselnden Paaren der Stäbe (120) benachbart den Verbindungen (130) positioniert ist, wobei ein jeder der Verbindungsstäbe (140) an die benachbarten Stäbe (120) geschweißt ist.

3. Filtersieb nach Anspruch 1, das aufweist:
eine Vielzahl von zylindrischen Stapelteilen (210A ...), die zusammengestapelt sind, wobei ein jedes der Stapelteile (210A-C) eine Vielzahl von Tafeln (102A ...) aufweist, wobei eine jede der Tafeln (102A ...) die Vielzahl der Stäbe (120) und die Vielzahl der Drähte (110) aufweist,
wobei bei den Tafeln (102A ...) für ein jedes der Stapelteile (210A ...) die ersten Enden der Stäbe (120) an die zweiten Enden der Stäbe (120) angrenzen, um eine Vielzahl von Verbindungen (130) zu bilden, und wobei eine Vielzahl von Verbindungsstäben (140) zwischen abwechselnden Paaren der Stäbe (120U-L) benachbart den Verbindungen (130) positioniert ist, wobei ein jeder der Verbindungsstäbe (140) an die benachbarten Stäbe (120) geschweißt ist.

4. Sieb nach Anspruch 1, 2 oder 3, bei dem die ersten Enden der Stäbe (120) jeweils einen Vorsprung (124) aufweisen, der sich vom ersten Ende längs des ersten Randes so erstreckt, dass das erste Ende am zweiten Rand eine Abschrägung (122) definiert.

5. Sieb nach Anspruch 4, bei dem die zweiten Enden der Stäbe (120) jeweils eine bündige Fläche definieren.

6. Sieb nach Anspruch 4, bei dem die Vorsprünge (124) Schlitzschweißnähte (160) mit den zweiten Enden der Stäbe (120) an den Verbindungen (130) aufweisen.

7. Sieb nach Anspruch 4, bei dem ein jeder der Verbindungsstäbe (140) einen Querschnitt mit einer Seitenabmessung aufweist, die kleiner ist als eine Tiefe der Abschrägung (122) vom zweiten Rand des Stabes (120).

8. Sieb nach Anspruch 1, 2 oder 3, bei dem ein jeder der Verbindungsstäbe (140) einen Querschnitt mit einer Seitenabmessung aufweist, die im Wesentlichen gleich einem Abstand ist, der die benachbarten Stäbe (120U-L) trennt.

9. Sieb nach Anspruch 1, 2 oder 3, bei dem ein jeder der Verbindungsstäbe (140) eine rechteckige Schweißnaht (150) zwischen dem Verbindungsstab (140) und den zweiten Rändern eines jeden der benachbarten Stäbe (120U-L) benachbart den Verbindungen (130) aufweist.

10. Sieb nach Anspruch 3, bei dem der Siebzylinder (220) mindestens einen Teil einer Siebtrommel oder eines Mittelrohres einer radialen Strömungsbaugruppe aufweist.

11. Montageverfahren für Filtersieb, das die folgenden Schritte aufweist:
Anordnen von parallelen Stäben (120) in einer ersten Richtung;
Befestigen von parallelen Drähten (110) an den parallelen Stäben (120) in einer zweiten Richtung senkrecht zur ersten Richtung; und
Ausbilden von Verbindungen (130) durch Anfügen der verbundenen Enden von mindestens einigen der Stäbe (120) an die bündigen Enden von mindestens einigen der Stäbe (120); und
Schweißen einer Vielzahl von Verbindungsstäben (140) zwischen abwechselnde Paare von Stäben (120U-L) benachbart den Verbindungen (130).

12. Verfahren nach Anspruch 11, bei dem das Anordnen der parallelen Stäbe (120) und das Befestigen der parallelen Drähte (110) die Ausbildung einer Vielzahl von separaten Tafeln (102A ...) mit einer Vielzahl von parallelen Stäben (120) aufweist, wobei eine jede der Tafeln (102A ...) die verbundenen Enden der Stäbe (120) längs eines ersten Randes der Tafel (102A ...) und das bündige Ende der Stäbe (120) entlang eines entgegengesetzten zweiten Randes der Tafel (102A ...) aufweist.

13. Verfahren nach Anspruch 12, das außerdem die folgenden Schritte aufweist:
Zusammenfügen des ersten und zweiten Randes der separaten Tafeln (102A ...); und
Schweißen der Verbindungsstäbe (140) an den Verbindungen (130), die zwischen den angrenzenden Rändern gebildet werden.

14. Verfahren nach Anspruch 12, das außerdem das Bilden eines zylindrischen Stapelteils (210) mittels der folgenden Schritte aufweist:
Bilden einer länglichen Schicht (200) mit den separaten Tafel (102A ...);
Rollen der länglichen Schicht (200) zu einer zylindrischen Form; und
Verbinden der freien Enden der gerollten Schicht durch Schweißen der Verbindungsstäbe (140) abwechselnd auf die Verbindungen (130) an den freien Enden.

15. Verfahren nach Anspruch 14, das außerdem den Schritt des Bildens eines Siebzylinders (220) durch Stapeln einer Vielzahl von zylindrischen Stapelteilen (210A ...) miteinander aufweist.

## Revendications

1. Tamis filtrant (100), comprenant :
une pluralité de tiges (120), agencées de manière mutuellement parallèle dans une première direction, les tiges (120) comportant des première et deuxième extrémités opposées et des premier et deuxième bords opposés, les premières extrémités d'au moins certaines des tiges (120) rejoignant les deuxièmes extrémités d'au moins certaines des tiges (120) pour former des joints (130) ;
une pluralité de fils (110) agencés de manière mutuellement parallèle dans une deuxième direction, parallèle à la première direction, et fixés sur les premiers bords des tiges (120) ; et
une pluralité de barres d'assemblage (140) soudées entre des paires alternées de tiges (120), près des joints (130).

2. Tamis filtrant (100) selon la revendication 1, comprenant :
une pluralité de panneaux (102), chacun des panneaux (102) comportant la pluralité de tiges (120) et comportant la pluralité de fils (110) ;
un premier des panneaux (102A) comportant les premières extrémités de ses tiges (120) reliées aux deuxièmes extrémités des tiges (120) d'un deuxième des panneaux (102B), pour former une pluralité de joints (130) ; et
la pluralité de barres d'assemblage (140) étant positionnées entre des paires alternées de tiges (120), près des joints (130), chacune des barres d'assemblage (140) étant soudée sur les tiges adjacentes (120).

3. Tamis filtrant selon les revendications 1, comprenant :
une pluralité de parties de pile cylindriques (210A...) empilées, chacune des parties de pile (210A-C) comportant une pluralité de panneaux (102A...), chacun des panneaux (102A...) comportant la pluralité de tiges (120) et comportant la pluralité de fils (110) ;
les panneaux (102...) pour chacune des parties de pile (210A...) comportant les premières extrémités des tiges (120) reliées aux deuxièmes extrémités des tiges (120), pour former une pluralité de joints (130), et une pluralité de barres d'assemblage (140) positionnées entre des paires alternées des tiges (120U-L), près des joints (130), chacune des barres d'assemblage (140) étant soudée sur les tiges adjacentes (120).

4. Tamis selon les revendications 1, 2 ou 3, dans lequel les premières extrémités des tiges (120) comprennent chacune une patte (124), s'étendant à partir de la première extrémité le long du premier bord, de sorte que la première extrémité au deuxième bord définissent un biseau (122).

5. Tamis selon la revendication 4, dans lequel les deuxièmes extrémités des tiges (120) définissent chacune une surface à affleurement.

6. Tamis selon la revendication 4, dans lequel les pattes (124) comportent des soudures à entaille (160) avec les deuxièmes extrémités des tiges (120) au niveau des joints (130).

7. Tamis selon la revendication 4, dans lequel chacune des barres d'assemblage (140) a une section transversale avec une dimension de côté inférieure à une profondeur du biseau (122) du deuxième bord de la tige (120).

8. Tamis selon les revendications 1, 2 ou 3, dans lequel chacune des barres d'assemblage (140) a une section transversale avec une dimension de côté pratiquement égale à une distance séparant les tiges adjacentes (120U-L).

9. Tamis selon les revendications 1, 2 ou 3, dans lequel chacune des barres d'assemblage (140) comporte une soudure carrée (150) entre la barre d'assemblage (140) et les deuxièmes bords de chacune des tiges adjacentes (120U-L), près des joints (130).

10. Tamis selon la revendication 3, dans lequel le tamis cylindrique (220) comprend au moins une partie d'un panier ou d'un tube central d'un assemblage d'écoulement radial.

11. Procédé d'assemblage d'un tamis filtrant, comprenant les étapes ci-dessous :
agencement de tiges parallèles (120) dans une première direction ;
fixation de fils parallèles (110) aux tiges parallèles (120) dans une deuxième direction perpendiculaire à la première direction ; et
formation de joints (130) en reliant les extrémités reliées d'au moins certaines des tiges (120) aux extrémités à affleurement d'au moins certaines des tiges (120) ; et
soudage d'une pluralité de barres d'assemblage (140) entre des paires alternées de tiges (120U-L), près des joints (130).

12. Procédé selon la revendication 11, dans lequel les étapes d'agencement des tiges parallèles (120) et de fixation des fils parallèles (110) comprennent l'étape de formation d'une pluralité de panneaux séparés (102A...), comportant une pluralité de tiges parallèles (120), chacun des panneaux (102A...) comportant les extrémités reliées des tiges (120) le long d'un premier bord du panneau (120A...) et l'extrémité à affleurement des tiges (120) le long d'un deuxième bord opposé du panneau (102A...).

13. Procédé selon la revendication 12, comprenant en outre les étapes ci-dessous :
liaison des premier et deuxième bords des panneaux séparés (102A...) ; et
soudage des barres d'assemblage (140) au niveau des joints (130) formés entre les bords adjacents.

14. Procédé selon la revendication 12, comprenant en outre la formation d'une partie de pile cylindrique (210) par exécution des étapes ci-dessous :
formation d'une feuille allongée (200) avec les panneaux séparés (102A...) ;
enroulement de la feuille allongée (200) en une forme cylindrique ; et
connexion des extrémités libres de la feuille enroulée en soudant les barres d'assemblage (140) de manière alternée sur les joints (130) au niveau des extrémités libres.

15. Procédé selon la revendication 14, comprenant en outre l'étape de formation d'un tamis cylindrique (220) en empilant une pluralité des parties de pile cylindriques (210A...).
